# EUROPÄISCHE PATENTSCHRIFT

(11) **EP 2 628 520 B1**
(45) Veröffentlichungstag und Bekanntmachung des Hinweises auf die Patenterteilung: **12.08.2015**
(21) Anmeldenummer: 12155332.5
(22) Anmeldetag: 14.02.2012
(51) Int. Cl.: B01D 53/04

(54) **Verfahren und Vorrichtung zur zyklischen Adsorption einer Komponente aus einem Ausgangsgas mit einem Verdichter mit variabler Leistung**
Device and method for cyclic adsorption of a component from output gas with a variable power compressor
Procédé et dispositif d'adsorption cyclique d'un composant à partir d'un gaz de sortie avec un compresseur à performance variable

(43) Veröffentlichungstag der Anmeldung: 21.08.2013
(73) Patentinhaber: ultra air gmbh, 40721 Hilden (DE)
(72) Erfinder: Müller, Frank, 40764 Langenfeld (DE)
(74) Vertreter: Naeven, Ralf

(56) Entgegenhaltungen:
- DE-C2- 3 720 915
- US-A- 5 555 749
- US-A- 5 730 778
- US-A1- 2008 005 963
- US-A1- 2008 005 964
- US-A1- 2009 241 771
- US-A1- 2011 277 629
- US-B1- 6 273 936

## Beschreibung

Die Erfindung betrifft ein Verfahren zur Entfernung einer Komponente aus einem Ausgangsgas mittels Adsorption gemäß dem Oberbegriff des Anspruchs 1 sowie eine Vorrichtung gemäß dem Oberbegriff des Anspruchs 7 zur Durchführung des Verfahrens.

Ein Gas im Sinne dieser Erfindung kann ein einzelnes Gas oder ein Gasgemisch, z.B. Luft, sein. Das Ausgangsgas enthält eine oder mehrere zu entfernende Komponenten, wobei es sich bei der (den) zu entfernende(n) Komponente(n) im Falle von Gas um Feuchtigkeit und im Falle eines Gasgemischs um ein oder mehrere chemische Elemente, eine oder mehrere chemische Verbindungen und/oder um Feuchtigkeit handeln kann. Feuchtigkeit kann als gasförmige Feuchtigkeit (z.B. Wasserdampf) oder aber auch als in feinen Tröpfchen kondensierte Flüssigkeit (z.B. Wassertröpfchen) vorliegen.

Ein Verfahren sowie eine Vorrichtung der vorgenannten Art sind aus der DE 37 20 915 C2 bekannt. Bei dem bekannten Verfahren wird zur Entfernung einer Komponente aus einem als Ausgangsgas zugeführten komprimierten Gasgemisch das Gasgemisch in eine Kammer eingespeist, welche mit einem zur Adsorption der zu entfernenden Komponente dienenden Adsorptionsmittel gefüllt ist. Bei der zu entfernenden Komponente handelt es sich nach den Aussagen in der vorgenannten Patentschrift um Dampf, nach diesseitigem Verständnis z.B. um gasförmige Feuchtigkeit oder in schwebenden Tröpfchen kondensiertes Wasser. Eine zweite Kammer wird ebenfalls zur Adsorption vorgesehen, so dass eine der Kammern einer Reaktivierung unterzogen werden kann, während in der anderen Kammer der Adsorptionsprozess stattfindet. So ist es möglich, den Adsorptionsprozess durch abwechselnde Benutzung der Kammern kontinuierlich durchzuführen.

Die Reaktivierung erfolgt in einem ersten Schritt durch Regeneration des Adsorptionsmittels, indem der aufgenommene Dampf bei erhöhter Temperatur in einem Desorptionsgasstrom desorbiert. Im zweiten Schritt wird die während des Desorptionsprozesses erwärmte Kammer mittels eines Kühlgases gekühlt, um diese für den anschließenden Adsorptionsprozess vorzubereiten.

Aus dem vorgenannten Stand der Technik ist es bekannt, sowohl als Desorptionsgas als auch als Kühlgas Umgebungsluft einzusetzen. Dabei wird der Desorptionsgasdurchfluss in entgegengesetzter Richtung zur Strömungsrichtung des Ausgangsgases während des Adsorptionsprozesses und der Kühlgasdurchfluss in gleicher Richtung zur Strömungsrichtung des Ausgangsgases während des Adsorptionsprozesses durchgeführt, d.h. es werden für Desorption und Kühlung einander entgegengesetzte Strömungsrichtungen vorgesehen.

Aus dem genannten Stand der Technik ist es bekannt, sowohl für den Desorptionsgasdurchfluss als auch für den Kühlgasdurchfluss dieselbe Verdichtereinheit, dort ein Gebläse, einzusetzen. Zum Erreichen der gewünschten Umkehr der Strömungsrichtung kann bei einer Verdichtereinheit die Laufrichtung umgekehrt werden. Da Verdichtereinheiten, z.B. wegen der Stellung und Ausrichtung der Gebläseschaufeln, eine Vorzugslaufrichtung aufweisen, hat die Umkehrung der Laufrichtung allerdings in der Regel den Nachteil einer geringeren Leistung in der nicht bevorzugten Laufrichtung.

Für den Regenerationsprozess wird das Desorptionsgas mittels einer in Strömungsrichtung vor oder hinter dem Gebläse angeordneten Heizeinrichtung erhitzt. Um einen reproduzierbaren Reaktivierungsprozess zu erreichen, sind möglichst konstante und vorhersagbare Parameter während des Desorptionsprozesses und während der Kühlung gewünscht. Insbesondere wird eine möglichst konstante Temperatur des in die Kammer eintretenden Desorptionsgases angestrebt. Es ist aus dem Stand der Technik allgemein bekannt, die Desorptionsgastemperatur über die Heizleistung der Heizeinrichtung zu regeln. Es ist außerdem allgemein bekannt, zur Einstellung der Regenerationstemperatur den Volumenstrom des Gebläses mittels eines Drosselorgans der installierten Heizleistung anzupassen. Die Drosselung verbraucht allerdings einen Teil der Energielast der Verdichtereinheit.

Es ist nun Aufgabe der vorliegenden Erfindung, ein Verfahren und eine Vorrichtung der eingangs genannten Art zur Verfügung zu stellen, die zu einer verbesserten Leistung bei der Kühlung einer zu reaktivierenden Kammer und zu Energieeinsparungen während der Desorptionsphase führt.

Diese Aufgabe wird bei einem Verfahren der eingangs genannten Art mit den kennzeichnenden Merkmalen des Anspruchs 1 und bei einer Vorrichtung der eingangs genannten Art durch die kennzeichnenden Merkmale des unabhängigen Vorrichtungsanspruchs 6 gelöst.

Somit ist es vorgesehen, die Leistung der Verdichtereinheit über die Frequenz des an der Verdichtereinheit anliegenden Wechselstromes zu steuern. Hierdurch wird außerdem eine Unabhängigkeit der Verdichtereinheit von der üblichen Netzfrequenz von z. B. in Europa 50 Hz erreicht. Der Verdichter kann mittels Frequenzänderung auf höhere oder geringere Drehzahlen eingestellt und in seiner Leistung angepasst werden. Dies ist gerade für die hier vorgesehene Vorrichtung mit nur einer Verdichtereinheit vorteilhaft, die für die Desorptionsphase und für die Kühlphase einander entgegengesetzte Strömungsrichtungen erzeugen soll. Bei Laufrichtung entgegen der Vorzugsrichtung kann die ansonsten gegenüber der Vorzugsrichtung bei üblicher Netzfrequenz geringere Leistung der Verdichtereinheit durch Auswahl einer höheren Frequenz zumindest verbessert werden. Bei geeigneter Verdichtereinheit ist es möglich, die Leistung bis zum vollständigen Ausgleich des erwähnten Leistungsverlustes oder auch darüber hinaus zu steigern.

Für die Frequenzsteuerung kann ein Frequenzumrichter eingesetzt werden.

Unter Steuerung der Leistung der Verdichtereinheit mittels der Wechselstromfrequenz wird die Veränderung der vom Verdichter aufgenommenen elektrischen Leistung durch Veränderung der an der Verdichtereinheit anliegenden Wechselstromfrequenz verstanden.

Die Steuerung durch Frequenzänderung ist auch Teil der Regelung, die im erfindungsgemäßen Verfahren für die Desorptionsphase eingesetzt wird. Dabei wird die an geeigneter Stelle in Strömungsrichtung hinter der Heizeinrichtung gegebene Temperatur des Desorptionsgases über den Volumenstrom des Desorptionsgases mit der an der Verdichtereinheit anliegenden und als Stellgröße dienenden Wechselstromfrequenz geregelt.

Auf diese Weise kann die Heizeinrichtung mit einer konstanten Leistung betrieben werden. Da nunmehr die Verdichtereinheit den Gasdurchfluss im Zuge der Temperaturregelung anpasst, kann auf die im Stand der Technik regelmäßig eingesetzte Drosselung verzichtet werden. Hierdurch kann bei ansonsten für die Verdichtereinheit ungünstigen Betriebsdaten eine erhebliche Energieeinsparung für den Betrieb der Verdichtereinheit erreicht werden. Wird bei einer Vorrichtung mit Drosselklappe der durch die Verdichtereinheit erzeugte Überdruck durch Drosselung erhöht, um einen bestimmten Volumenstrom einzustellen, steigt der Leistungsbedarf für die Verdichterwelle linear dazu an. So wurde beispielsweise bei einem bestimmten Volumenstrom und Gebläsetyp ermittelt, dass bei einer Vorrichtung mit Drosselklappe bei einem zur Einstellung des Volumenstroms durch Drosselung erzwungenen Überdruck von etwa 120 mbar statt einem anlagenseitig erforderlichen Überdruck von 80 mbar ein Leistungsbedarf für die Verdichterwelle von 4,5 kW besteht. Im Vergleich dazu kann gemäß der Erfindung bei Verzicht auf die Drosselklappe mit einem Überdruck von 80 mbar bei reduzierter Frequenz gefahren werden, was bei gleichem Volumenstrom und Gebläsetyp zu einem Leistungsbedarf von lediglich 3 kW führt.

Es kann auch vorteilhaft sein, in der Kühlphase das Kühlgas im geschlossenen Kreislauf zu führen. Für diesen Fall ist im Kreislauf, z. B. in Strömungsrichtung hinter der Verdichtereinheit, eine Kühleinrichtung, z. B. ein Wärmetauscher, vorgesehen. Ein geschlossener Kreislauf macht unabhängig von schwankenden und möglicherweise widrigen Umgebungsbedingungen. Auch ohne geschlossenen Kreislauf kann eine Kühlung des Kühlgases, z.B. bei Ansaugen unerwünscht warmer Umgebungsluft, sinnvoll sein.

Im Rohrsystem der Vorrichtung sind ein oder mehrere automatische oder gesteuerte Absperrelemente vorgesehen, die bestimmte Teile des Rohrsystems für unterschiedliche Verfahrensabschnitte nutzbar machen. Mit den Absperrelementen können Gasaustritte oder Gaseintritte abgesperrt werden, um für den Kühlprozess einen geschlossenen Kreislauf zu erzeugen.

Das Rohrsystem kann so gestaltet sein, dass im Falle eines nicht geschlossenen Kreislaufs für die Kühlphase der Austritt für Kühlgas und Desorptionsgas derselbe Gasaustritt vorgesehen ist. Dieser Gasaustritt kann räumlich von einem oder mehreren Gaseintritten getrennt sein. Auf diese Weise kann vermieden werden, dass austretendes Gas, z.B. wegen erhöhter Temperatur, die Qualität des später eingesaugten Gases beeinträchtigt.

Die Erfindung ist besonders vorteilhaft für die Trocknung von Druckluft, jedoch nicht auf diese Anwendung beschränkt. Die zu entfernende Komponente kann eine andere als gasförmiges oder kondensiertes Wasser sein, z.B. CO₂ welches vor Luftzerlegungsanlagen zur Sauerstoff- und/oder Sfickstofferzeugung aus einem Luftstrom entfernt wird, und das Ausgangsgas ein anderes als Druckluft. Das Adsorptionsmittel ist gegebenenfalls entsprechend anzupassen.

Soweit in den Ansprüchen und in der Beschreibung von einem Gas die Rede ist, kann es sich dabei um ein einzelnes Gas, aber auch um ein Gasgemisch handeln, zum Beispiel um Luft als beispielhafte Variante für das Desorptionsgas und/oder das Kühlgas. Anstelle von Luft können auch andere Gasgemische oder Gase für die Kühlung oder die Desorptionsphase eingesetzt werden

Im Folgenden werden beispielhafte Ausführungsformen des erfindungsgemäßen Verfahrens sowie der erfindungsgemäßen Vorrichtungen anhand von Figuren dargestellt.

Es zeigt schematisch
- Fig. 1:: eine erste Variante einer erfindungsgemäßen Adsorptionsvorrichtung während des Desorptionsprozesses für die zu reaktivierende Kammer,
- Fig. 2:: die erste Variante gemäß Fig. 1 während des Kühlprozesses für die zu reaktivierende Kammer
- Fig. 3:: eine zweite Variante einer erfindungsgemäßen Adsorptionsvorrichtung während des Desorptionsprozesses für die zu reaktivierende Kammer,
- Fig. 4:: die zweite Variante gemäß Fig. 3 während des Kühlprozesses für die zu reaktivierende Kammer
- Fig. 5:: eine dritte Variante einer erfindungsgemäßen Adsorptionsvorrichtung während des Desorptionsprozesses für die zu reaktivierende Kammer,
- Fig. 6:: die dritte Variante gemäß Fig. 5 während des Kühlprozesses für die zu reaktivierende Kammer

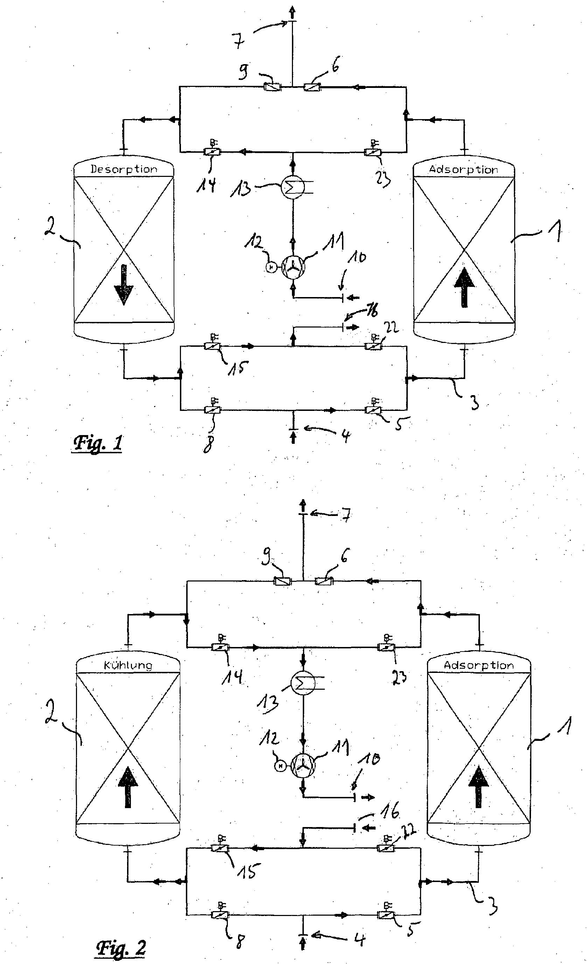

In den in den Figuren 1 bis 6 dargestellten drei Varianten einer Trocknungsvorrichtung für Druckluft sind einander übereinstimmende Vorrichtungselemente mit denselben Bezugszeichen versehen. Sämtliche Varianten umfassen eine erste Kammer 1 und eine zweite Kammer 2, die jeweils ein hier nicht dargestelltes Adsorptionsmittel enthalten. Beide Kammern 1 und 2 werden wechselweise zur Trocknung der Druckluft mittels Adsorption des enthaltenen Wassers verwendet. In sämtlichen Figuren ist die erste Kammer 1 im Trocknungsprozess dargestellt, während die zweite Kammer 2 einen Reaktivierungsprozess durchläuft. Nach erfolgter Reaktivierung der zweiten Kammer 2 kann die zu trocknende Druckluft über die zweite Kammer 2 geführt werden, während die erste Kammer 1 reaktiviert wird. Der Gastransport erfolgt über Rohrleitungen 3, wobei in den Figuren die Transportrichtung durch Pfeile gekennzeichnet ist.

Der Trocknungsprozess mittels Adsorption in der ersten Kammer 1 ist in allen in den Figuren 1 bis 6 dargestellten Verfahrensvarianten identisch und wird im Folgenden dargestellt.

Über einen Drucklufteinlass 4 und eine erste steuerbare Absperrklappe 5 gelangt die zu trocknende Druckluft in die erste Kammer 1. Das darin enthaltene und hier nicht dargestellte Adsorptionsmittel adsorbiert das in der Druckluft enthaltene gasförmige Wasser bis zu einem bestimmten Grade. Die getrocknete Druckluft verlässt über eine erste Rückschlagklappe 6 und den Druckluftauslass 7 die Vorrichtung, z. B. um einem weiteren Prozess zugeführt zu werden. Für einen entsprechenden Weg zur Trocknung über die zweite Kammer 2 sind eine zweite steuerbare Absperrklappe 8 und eine zweite Rückschlagklappe 9 vorgesehen.

Im Folgenden wird der in Fig. 1 dargestellte Desorptionsprozess für die erste Variante der Trocknungsvorrichtung beschrieben. Für die Desorption wird Umgebungsluft eingesetzt. Selbstverständlich können in entsprechender Weise auch andere Gase vorgesehen werden. Die Umgebungsluft tritt über einen ersten Umgebungsluftein-/auslass 10, angesaugt über eine Verdichtereinheit 11, in die Vorrichtung ein. Die Verdichtereinheit 11 verfügt über einen mittels eines hier nicht dargestellten Frequenzumrichters frequenzgesteuerten Motor 12 und pumpt die zur Desorption des Adsorptionsmittels vorgesehene Umgebungsluft über eine Heizeinrichtung 13 und über eine dritte steuerbare Absperrklappe 14 in die zweite Kammer 2.

Die Desorption erfolgt bei erhöhter Temperatur, die zum Erreichen reproduzierbarer Ergebnisse geregelt ist. Die Regelung erfolgt über die Frequenzsteuerung der Verdichtereinheit 11, so dass die Heizeinrichtung 13 mit konstanter Leistung, also ungeregelt, gefahren werden kann. Mittels der Frequenzregelung kann leicht auf sich ändernde Parameter der eingesetzten Umgebungsluft, z. B. Temperatur, Druck oder Wassergehalt, reagiert werden. Im Desorptionsprozess nimmt die erhitzte Umgebungsluft Wasser vom Adsorptionsmittel der zweiten Kammer 2 auf und tritt nach Verlassen der zweiten Kammer 2 über eine vierte steuerbare Absperrklappe 15 und dem zweiten Umgebungsluftein-/auslass 16 aus der Vorrichtung, z. B. in die Umgebung, aus. Die Beendigung der Desorptionsphase kann zeitabhängig oder temperaturabhängig erfolgen. Bevorzugt wird zur Feststellung des Endes der Desorptionsphase der Temperaturanstieg der austretenden Luft herangezogen. Oberhalb eines vorbestimmten Schwellenwertes für die Temperatur der austretenden Luft kann der Desorptionsprozess als abgeschlossen betrachtet werden, d.h. das Adsorptionsmittel ist regeneriert. Zur vollständigen Reaktivierung der zweiten Kammer 2 ist diese nun noch zu kühlen, bevor sie dem Adsorptionsprozess wieder zur Verfügung steht.

Der Kühlprozess erfolgt in sämtlichen dargestellten Varianten mit einer Strömungsrichtung, die der Strömungsrichtung beim Adsorptionsprozess gleich ist und der Strömungsrichtung im Desorptionsprozess entgegengerichtet. In der Variante gemäß Fig. 2 wird für den Kühlprozess ebenfalls Umgebungsluft eingesetzt. Hierzu wird die Verdichtereinheit 11 gegenüber dem Desorptionsprozess in entgegengesetzter Richtung betrieben. Mittels des hier nicht dargestellten Frequenzumrichters wird die an der Verdichtereinheit 11 anliegende Wechselstromfrequenz erhöht, um auch im Rückwärtslauf der Verdichtereinheit einen möglichst hohen Umgebungsluftdurchsatz und damit eine hohe Kühlleistung zu erreichen.

Somit wird Umgebungsluft über den zweiten Umgebungsluftein-/auslass 16 bei geöffneter vierter Absperrklappe 15 und dritter Absperrklappe 14 durch die zweite Kammer 2 gesaugt und tritt am ersten Umgebungsluftein-/auslass 10 wieder in die Umgebung aus. Die Heizeinrichtung 13 bleibt bei diesem Prozess ausgeschaltet. Über eine Messung der aus der zweiten Kammer 2 heraustretenden Lufttemperatur kann festgestellt werden, ob die Umgebungsluft noch durch die zweite Kammer 2 erwärmt wird. Ist dies nicht der Fall, ist die Kühlung abgeschlossen und die zweite Kammer 2 kann für den Adsorptionsprozess eingesetzt werden.

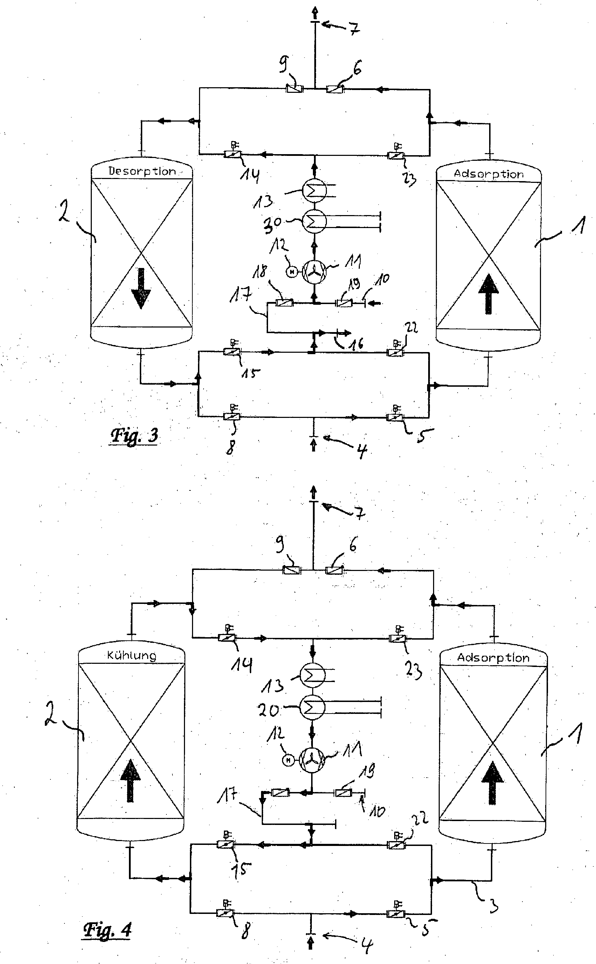

Die zweite Variante der Trocknungsvorrichtung gemäß den Figuren 3 und 4 unterscheidet sich von der ersten Variante durch einen geschlossenen Kreislauf während des Kühlprozesses (Fig. 4). Um den geschlossenen Kreislauf zu ermöglichen, sind im Vergleich zur Variante nach den Fig. 1 und 2 der erste Umgebungsluftein-/auslass 10 und der zweite Umgebungsluftein-/auslass 16 über ein zusätzliches Rohrleitungsstück 17 miteinander verbunden. Der erste Umgebungsluftein-/auslass 10 dient nunmehr nur noch als Einlass für die Umgebungsluft und der zweite Umgebungsluftein-/auslass 16 allein noch als Auslass im Desorptionsprozess gemäß Fig. 2. Der Desorptionsgasstromverlauf gemäß Fig. 3 ist dem der Fig. 1 identisch. Eine dritte Rückschlagklappe 18 sorgt dafür, dass die Verdichtereinheit 11 während der Desorptionsphase kein Gas aus dem zusätzlichen Rohrleitungsstück 17 ansaugt.

Für den Kühlprozess der zweiten Vorrichtungsvariante (Fig. 4) wird die Laufrichtung der Verdichtereinheit 11 gegenüber dem Desorptionsprozess wieder umgekehrt. Dabei läuft die zu diesem Zeitpunkt der Beendigung des Desorptionsprozesses im Rohrsystem vorhandene Luft im geschlossenen Kreislauf. Hierfür schließt eine vierte Rückschlagklappe 19 den ersten Umgebungsluftein-/auslass 10 ab. Als Kühlgas dient somit das nach Abschluss des Desorptionsprozesses im Rohrsystem befindliche Gas, also die eingesetzte Umgebungsluft. Nach Durchlauf durch die zu kühlende zweite Kammer 2 wird das Kühlgas in einer Kühleinrichtung 30, z. B. einem Wärmetauscher, gekühlt. Die entgegen ihrer Vorzugsrichtung laufende Verdichtereinheit 11 wird wie auch in der Variante nach Fig. 2 mittels der Frequenzsteuerung auf eine höhere, z. B. maximale Drehzahl gesteigert, um einen möglichst hohen Durchsatz zu erreichen.

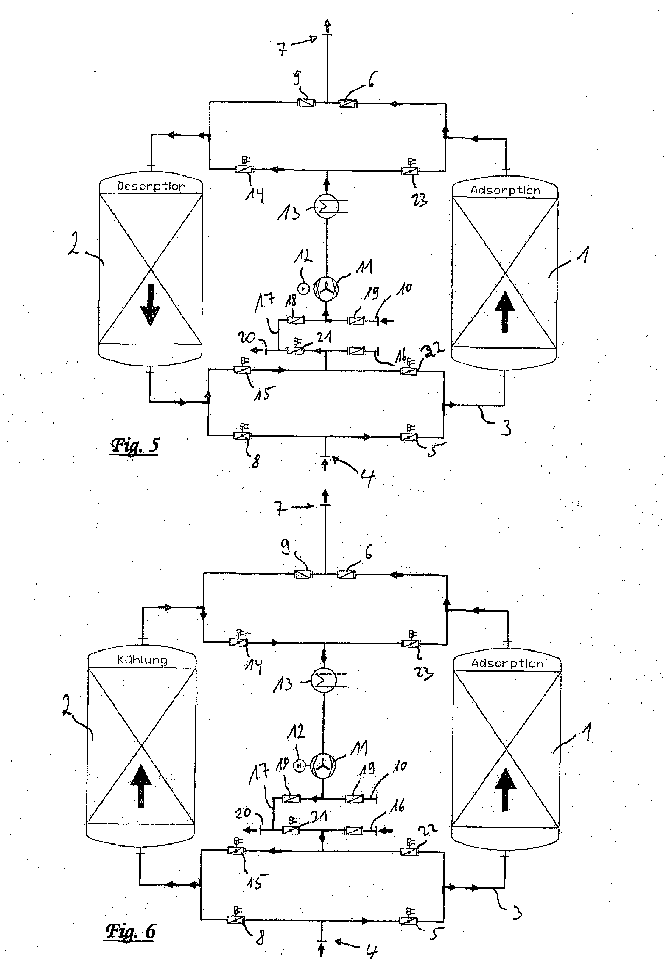

Bei der dritten Variante der Trocknungsvorrichtung gemäß den Figuren 5 und 6 wird wieder Umgebungsluft sowohl für die Desorption als auch für den Kühlprozess eingesetzt und in beiden Prozessen die eingesetzte Umgebungsluft in die Umgebung entlassen. Allerdings wird durch den speziellen Aufbau der Variante nach Figuren 5 und 6 ein einziger gemeinsamer Umgebungsluftauslass 20 vorgesehen, durch den die Umgebungsluft sowohl im Desorptionsprozess als auch im Kühlprozess die Vorrichtung verlässt. Der gemeinsame Umgebungsluftauslass 20 ist im zusätzlichen Rohrleitungsstück 17 angeordnet. Des Weiteren ist für die korrekte Leitung der Luftströme eine fünfte steuerbare Absperrklappe 21 vorgesehen.

Im Desorptionsprozess tritt Umgebungsluft über den ersten Umgebungsluftein-/auslass 10 und die vierte Rückschlagklappe 19 ein und wird über die mit konstanter Leistung fahrende Heizeinrichtung 13 und die Absperrklappe 14 in die zweite Kammer 2 geleitet. Die Temperatur der in die zweite Kammer 2 eintretenden und durch die Heizeinrichtung erwärmten Luft wird mittels der frequenzgesteuerten Verdichtereinheit 11 geregelt. Nach Austritt aus der zweiten Kammer 2 verlässt die durch den Desorptionsprozess angefeuchtete Luft über die vierte Absperrklappe 15 und die fünfte Absperrklappe 21 die Vorrichtung über den gemeinsamen Umgebungsluftauslass 20.

Für den Kühlprozess wird wiederum die Laufrichtung der Verdichtereinheit 11 gewechselt und die Wechselstromfrequenz zum Antrieb der Verdichtereinheit erhöht. Hierdurch wird über den zweiten Umgebungsluftein-/auslass 16 Umgebungsluft eingesaugt und über die vierte Absperrklappe 15 zur zweiten Kammer 2 geführt. Über die dritte Absperrklappe 14, die Heizeinrichtung 13, die Verdichtereinheit 11 und die Rückschlagklappe 18 tritt die als Kühlgas eingesetzte Umgebungsluft wieder aus dem gemeinsamen Umgebungsluftauslass 20 aus. Auf diese Weise können Umgebungsluftauslass 20 und die jeweils allein als Einlässe dienenden Umgebungsluftein-/auslässe 10 und 16 an getrennten Orten vorgesehen werden.

Die in den Figuren bislang nicht beschriebenen weiteren steuerbaren Absperrklappen 22 und 23 übernehmen entsprechende Funktionen wie die Absperrklappen 15 und 14, wenn die Rollen zwischen der ersten Kammer 1 und der zweiten Kammer 2 getauscht werden.

### Bezugszeichenliste

- 1: Kammer
- 2: Kammer
- 3: Rohrleitung
- 4: Drucklufteinlass
- 5: erste Absperrklappe
- 6: erste Rückschlagklappe
- 7: Druckluftauslass
- 8: zweite Absperrklappe
- 9: zweite Rückschlagklappe
- 10: erster Umgebungsluftein-/auslass
- 11: Verdichtereinheit
- 12: Motor
- 13: Heizeinrichtung
- 14: dritte Absorptionsklappe
- 15: vierte Absorptionsklappe
- 16: zweiter Umgebungsluftein-/auslass
- 17: zusätzliches Rohrleitungsstück
- 18: dritte Rückschlagklappe
- 19: vierte Rückschlagklappe
- 20: gemeinsamer Umgebungsluftauslass
- 21: fünfte Absperrklappe
- 22: Absperrklappe
- 23: Absperrklappe
- 30: Kühleinrichtung

## Patentansprüche

1. Verfahren zur Entfernung einer Komponente aus einem Ausgangsgas mittels Adsorption, bei dem
a) das Ausgangsgas über mindestens eine von mindestens zwei jeweils ein Adsorptionsmittel enthaltenden Kammern (1, 2) geführt wird, wobei mindestens eine der Kammern (1, 2) im Anschluss an einen in dieser Kammer (1, 2) durchgeführten Adsorptionsprozess reaktiviert wird,
b) zur Reaktivierung zunächst ein Desorptionsgas zur Regenerierung des darin enthaltenen Adsorptionsmittels und anschließend zur Kühlung ein Kühlgas durch die entsprechende Kammer (1, 2) geführt wird, wobei
c) der Desorptionsgasdurchfluss in entgegengesetzter Richtung zur Strömungsrichtung im Adsorptionsprozess und der Kühlgasdurchfluss in gleicher Richtung zur Strömungsrichtung im Adsorptionsprozess erfolgt und
d) Desorptionsgasdurchfluss sowie Kühlgasdurchfluss mittels derselben wechselstrombetriebenen Verdichtereinheit (11) bewirkt werden,
**dadurch gekennzeichnet, dass**
e) die Leistung der Verdichtereinheit (11) zumindest bei einem der Gasdurchflüsse über die Frequenz des Wechselstroms gesteuert wird, und
f) das Desorptionsgas vor Eintritt in die zugehörige Kammer (1, 2) mittels einer Heizeinrichtung (13) erwärmt und die in Stromrichtung hinter der Heizeinrichtung (13) gemessene Temperatur des Desorptionsgases über den Volumenstrom des Desorptionsgases geregelt wird, wobei die an der Verdichtereinheit (11) anliegende Wechselstromfrequenz als Stellgröße verwendet wird.

2. Verfahren nach Anspruch 1, **dadurch gekennzeichnet, dass** zur Umkehrung der Strömungsrichtung beim Übergang vom Desorptionsgasdurchfluss zum Kühlgasdurchfluss die Laufrichtung der Verdichtereinheit (11) umgekehrt wird und die Leistung der Verdichtereinheit (11) durch eine höhere Frequenz des Wechselstroms erhöht wird.

3. Verfahren nach einem der vorhergehenden Ansprüche, **dadurch gekennzeichnet, dass** das Kühlgas stromaufwärts zur zu kühlenden Kammer (1, 2) gekühlt wird.

4. Verfahren nach einem der vorhergehenden Ansprüche, **dadurch gekennzeichnet, dass** der Kühlgasdurchfluss in einem geschlossenen Kreis geführt wird.

5. Verfahren nach einem der Ansprüche 1 bis 3, **dadurch gekennzeichnet, dass** für das Desorptionsgas und das Kühlgas ein gemeinsamer Gasaustritt (20) verwendet wird.

6. Vorrichtung zur Durchführung des Verfahrens nach einem der Ansprüche 1 bis 5, umfassend
zwei jeweils ein Adsorptionsmittel enthaltende Kammern (1, 2),
eine über ein Rohrleitungssystem mit den Kammern (1, 2) verbundene, in zwei Strömungsrichtungen betreibbare und mit Wechselstrom betriebene Verdichtereinheit (11) und
eine im Rohrleitungssystem zwischen Verdichtereinheit, (11) und den Kammern (1, 2) angeordnete Heizeinrichtung (13),
**gekennzeichnet durch**
eine Einrichtung zur Frequenzsteuerung der Leistung der Verdichtereinheit (11) sowie einen Regelkreis mit der stromabwärts zur Heizeinrichtung (13) gemessenen Gastemperatur als Regelgröße und der an der Verdichtereinheit (11) anliegenden Wechselstromfrequenz als Stellgröße.

7. Vorrichtung nach Anspruch 6, **dadurch gekennzeichnet, dass** die Einrichtung zur Frequenzsteuerung einen Frequenzumrichter umfasst.

8. Vorrichtung nach Anspruch 6 oder 7, **dadurch gekennzeichnet, dass** für den Kühlgaseinsatz ein mittels steuerbarer oder automatischer Absperrelemente (5, 6, 8, 9, 14, 15, 18, 19, 21 - 23) schließbarer Kreislauf vorgesehen ist, der sowohl die Verdichtereinheit (11) als auch eine Gaskühleinrichtung (30) aufweist.

9. Vorrichtung nach einem der Ansprüche 6 bis 8, **dadurch gekennzeichnet, dass** ein für den Reaktivierungsvorgang vorgesehener Teil des Rohrleitungssystems einen ersten Umgebungslufteintritt (10) für den Desorptionsprozess, einen zweiten Umgebungslufteintritt (16) für den Kühlungsprozess sowie einen sowohl für den Kühlungsprozess als auch für den Regenerationsprozess dienenden gemeinsamen Gasaustritt (20) aufweist.

## Claims

1. Method for removing a component from output gas by adsorption, in which
a) the output gas is guided via at least one of at least two chambers (1, 2), each of which containing an adsorbent, wherein at least one of the chambers (1, 2) is reactivated subsequent to an adsorption process carried out in this chamber (1, 2),
b) for reactivation, first a desorption gas for regenerating the adsorbent contained in the corresponding chamber (1, 2) and then, for cooling, a cooling gas is guided through that chamber, wherein
c) the throughflow of desorption gas takes place in the opposite direction to the flow direction in the adsorption process and the throughflow of cooling gas takes place in the same direction as the flow direction in the adsorption process and
d) both the throughflow of desorption gas and the throughflow of cooling gas are effected by means of the same compressor unit (11) which is operated using alternating current,
**characterized in that**
e) the power of the compressor unit (11) is controlled, at least in the case of one of the gas throughflows, via the frequency of the alternating current, and
f) the desorption gas is heated by means of a heating device (13) before it enters the relevant chamber (1,2) and the temperature of the desorption gas, measured downstream of the heating device (13), is controlled via the volume flow rate of the desorption gas, wherein the alternating current frequency applied to the compressor unit (11) is used as manipulated variable.

2. Method according to Claim 1, **characterized in that**, in order to reverse the flow direction when switching from the desorption gas throughflow to the cooling gas throughflow, the direction of rotation of the compressor unit (11) is reversed and the power of the compressor unit (11) is increased by means of a higher frequency of the alternating current.

3. Method according to either of the preceding claims, **characterized in that** the cooling gas is cooled upstream of the chamber (1, 2) to be cooled.

4. Method according to one of the preceding claims, **characterized in that** the cooling gas throughflow is guided in a closed circuit.

5. Method according to one of Claims 1 to 3, **characterized in that** a common gas outlet (20) is used for the desorption gas and for the cooling gas.

6. Device for carrying out the method according to one of Claims 1 to 5, including
two chambers (1, 2), each containing an adsorbent,
a compressor unit (11) which is connected to the chambers (1, 2) via a pipe system, can be operated in two flow directions and is operated using alternating current, and
a heating device (13) arranged in the pipe system between the compressor unit (11) and the chambers (1, 2),
**characterized by**
a device for controlling the frequency of the power of the compressor unit (11) and a control loop using, as a controlled variable, the gas temperature measured downstream of the heating device (13) and, as manipulated variable, the alternating current frequency applied to the compressor unit (11).

7. Device according to Claim 6, **characterized in that** the device for controlling the frequency comprises a frequency converter.

8. Device according to Claim 6 or 7, **characterized in that** a circuit which can be closed by means of controllable or automatic shutoff elements (5, 6, 8, 9, 14, 15, 18, 19, 21-23) is provided for the use of cooling gas, which circuit includes both the compressor unit (11) and a gas cooling device (30).

9. Device according to one of Claims 6 to 8, **characterized in that** a part of the pipe system which is provided for the reactivation procedure includes a first ambient air inlet (10) for the desorption process, a second ambient air inlet (16) for the cooling process and a common gas outlet (20) which serves for both the cooling process and the regeneration process.

## Revendications

1. Procédé pour éliminer un composant d'un gaz de sortie par adsorption, dans lequel
a) le gaz de sortie est acheminé par le biais d'au moins une d'au moins deux chambres (1, 2) contenant chacune un agent d'adsorption, au moins l'une des chambres (1, 2) étant réactivée à la suite d'un processus d'adsorption effectué dans cette chambre (1, 2),
b) pour la réactivation d'abord, un gaz de désorption étant acheminé en vue de la régénération de l'agent d'adsorption contenu dans celui-ci et ensuite, pour le refroidissement, un gaz de refroidissement étant acheminé à travers la chambre correspondante (1, 2),
c) le flux de gaz de désorption étant orienté dans le sens opposé au sens d'écoulement dans le processus d'adsorption et le flux de gaz de refroidissement étant orienté dans le même sens que le sens d'écoulement dans le processus d'adsorption et
d) le flux de gaz de désorption ainsi que le flux de gaz de refroidissement étant obtenus au moyen de la même unité de compresseur (11) entraînée avec un courant alternatif, **caractérisé en ce que**
e) la puissance de l'unité de compresseur (11), au moins pour l'un des flux de gaz, est commandée par le biais de la fréquence du courant alternatif, et
f) le gaz de désorption, avant l'entrée dans la chambre associée (1, 2) est chauffé au moyen d'un dispositif de chauffage (13) et la température du gaz de désorption mesurée dans le sens d'écoulement derrière le dispositif de chauffage (13) est régulée par le biais du débit volumique du gaz de désorption, la fréquence du courant alternatif s'appliquant à l'unité de compresseur (11) étant utilisée comme grandeur de réglage.

2. Procédé selon la revendication 1, **caractérisé en ce que**, pour inverser le sens d'écoulement, lors du passage du flux de gaz de désorption au flux de gaz de refroidissement, le sens de rotation de l'unité de compresseur (11) est inversé et la puissance de l'unité de compresseur (11) est augmentée par une fréquence plus élevée du courant alternatif.

3. Procédé selon l'une quelconque des revendications précédentes, **caractérisé en ce que** le gaz de refroidissement est refroidi en amont de la chambre à refroidir (1, 2).

4. Procédé selon l'une quelconque des revendications précédentes, **caractérisé en ce que** le flux de gaz de refroidissement est acheminé en circuit fermé.

5. Procédé selon l'une quelconque des revendications 1 à 3, **caractérisé en ce qu'**une sortie de gaz commune (20) est utilisée pour le gaz de désorption et le gaz de refroidissement.

6. Dispositif pour mettre en oeuvre le procédé selon l'une quelconque des revendications 1 à 5, comprenant
deux chambres (1, 2) contenant chacune un agent d'adsorption,
une unité de compresseur (11) connectée par le biais d'un système de conduite tubulaire aux chambres (1, 2), pouvant être entraînée dans deux sens d'écoulement et fonctionnant avec un courant alternatif et
un dispositif de chauffage (13) disposé dans le système de conduite tubulaire entre l'unité de compresseur (11) et les chambres (1, 2), **caractérisé par**
un dispositif de commande de fréquence de la puissance de l'unité de compresseur (11) ainsi qu'un circuit de régulation utilisant la température du gaz mesurée en aval du dispositif de chauffage (13) en tant que grandeur de régulation et la fréquence du courant alternatif s'appliquant à l'unité de compresseur (11) en tant que grandeur de réglage.

7. Dispositif selon la revendication 6, **caractérisé en ce que** le dispositif de commande de fréquence comprend un convertisseur de fréquence.

8. Dispositif selon la revendication 6 ou 7, **caractérisé en ce que**, pour l'utilisation du gaz de refroidissement, on prévoit un circuit pouvant être fermé par des éléments d'arrêt commandables ou automatiques (5, 6, 8, 9, 14, 15, 18, 19, 21-23), lequel circuit présente à la fois l'unité de compresseur (11) et un dispositif de refroidissement de gaz (30).

9. Dispositif selon l'une quelconque des revendications 6 à 8, **caractérisé en ce qu'**une partie du système de conduite tubulaire prévue pour l'opération de réactivation présente une première entrée d'air ambiant (10) pour le processus de désorption, une deuxième entrée d'air ambiant (16) pour le processus de refroidissement ainsi qu'une sortie de gaz commune (20) servant à la fois pour le processus de refroidissement et pour le processus de régénération.
